# EUROPEAN PATENT SPECIFICATION

(11) **EP 0 504 847 B1**
(45) Date of publication and mention of the grant of the patent: **12.07.1995**
(21) Application number: 92104699.1
(22) Date of filing: 18.03.1992
(51) Int. Cl.: B65G 69/16

(54) **Apparatus for filling industrial containers with machined mechanical parts, such as semimachined items and the like**
Vorrichtung zum Füllen von Industriebehältern mit maschinell bearbeiteten Werkstücken wie zum Beispiel teilbearbeiteten Werkstücken oder dergleichen
Appareil pour le chargement de conteneurs industriels avec des pièces usinées par exemple des pièces semi-usinées ou analogues

(30) Priority: 21.03.1991 IT BO910089
(43) Date of publication of application: 23.09.1992
(73) Proprietor: Sbarzaglia, Giovanni, I-48018 Faenza (Ravenna) (IT)
(72) Inventor: Sbarzaglia, Giovanni, I-48018 Faenza (Ravenna) (IT)
(74) Representative: Modiano, Guido, Dr.-Ing.

(56) References cited:
- BE-A- 435 490
- US-A- 3 578 146
- THE MACHINIST vol. 46, No. 1917, 14 November 1953, LONDON page 97; H.WELSBACHER: 'PRACTICAL IDEAS FROM PRACTICAL MEN IN MANY COUNTRIES, TO HELP YOUIN YOUR JOB'
- VDI ZEITSCHRIFT vol. 128, No. 8, April 1986, DÜSSELDORF pages 255 - 258; J.HENKEL: 'FLEXIBEL LAGERN UND SÄGEN'

## Description

The present invention relates to an apparatus for filling industrial containers with machined mechanical parts, such as semimachined items and the like.

It is known that small mechanical parts manufactured by various industrial machining processes are often collected within large-capacity containers, wherein they are transported to subsequent production steps. The machined parts are generally conveyed into said containers by gravity.

Said machined parts are therefore unavoidably subjected to impacts which can damage them, with a reduction in the quality of the product and with the risk of a large amount of rejects.

The aim of the present invention is to solve this problem by providing an apparatus for filling industrial containers with machined mechanical parts conveyed from mechanical machines, without said parts being subjected to heavy impacts.

Within the scope of this aim, a further object of the present invention is to provide an apparatus for filling industrial containers which is simple in concept, safe and reliable in operation and versatile in use in relation to the different characteristics of the machined parts.

This aim and object as well as other objects which will become apparent hereinafter, are achieved, according to the invention, by the apparatus according to claim 1.

The details of the invention will become apparent from the detailed description of a preferred embodiment of the apparatus for filling industrial containers with machined mechanical parts, illustrated only by way of non-limitative example in the accompanying drawings, wherein:
figure 1 is a vertical sectional view of the apparatus for filling industrial containers according to the invention;

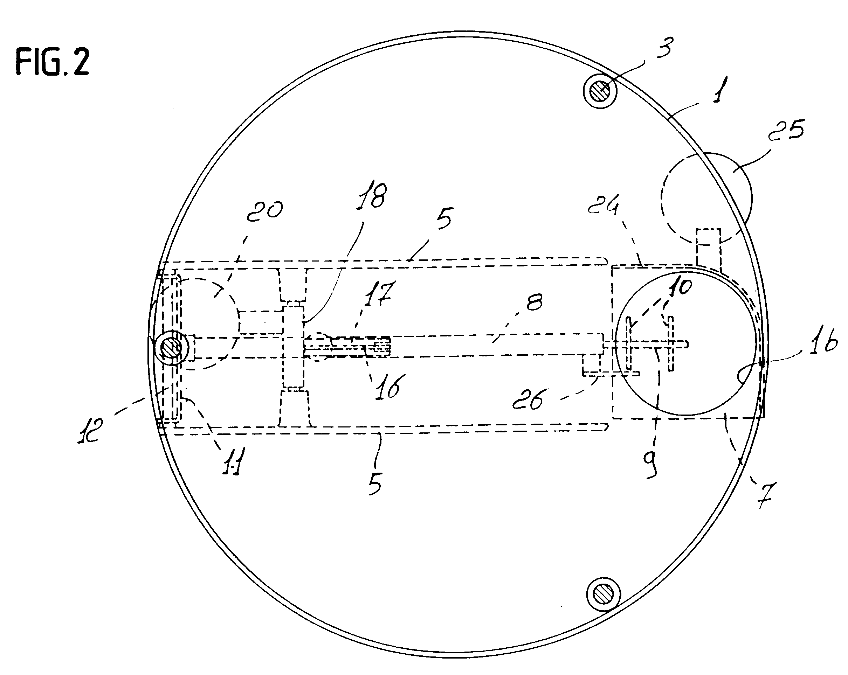

figure 2 is a top plan view thereof;
figure 3 is a side view of the tray for receiving machined parts;
figures 4 and 5 are respectively a transverse sectional view and a top view of said tray;
figure 6 is a perspective view of a supporting frame of the apparatus;
figure 7 is a view of a different embodiment of said supporting frame.

With particular reference to the above-mentioned figures, the apparatus for filling industrial containers with machined parts comprises a hopper 1 which is rotatable about a vertical axis 100 by a motor 2 having an output shaft. The hopper 1 is connected to the shaft of said motor 2 by means of arms 3 which extend radially with respect to the circular upper inlet 1a of said hopper. The motor 2 is suspended from a supporting frame which is described in detail hereinafter.

The hopper 1 has the shape of an oblique cone. In particular, the upper inlet 1a and the lower outlet 1b of the hopper 1 are tangent to a same substantially vertical plane. A ledge 4 is defined inside the hopper 1 opposite the outlet 1b and is conveniently downwardly concave.

A pair of mutually flanking wings 5, arranged symmetrically with respect to the most steeply inclined diametrical plane of said hopper, furthermore extends from the outer surface of the hopper 1.

The hopper 1 is preferably made of aluminum. The inner surface of the hopper 1 and the upper surface of the ledge 4 are conveniently provided with a lining 6 of shock-absorbing elastic material, for example of the type known by the registered Trademark Vulkollan.

Below the outlet 1b there is a tray 7 for receiving the machined parts. The tray 7 is oscillatably mounted at the end of an arm 8, which is arranged diametrically with respect to the hopper 1, by means of a pivot 9 which extends from said arm 1 and is substantially parallel to the axis of the terminal portion 8a of said arm 8. The pivot 9 engages, by virtue of the interposition of bearings, a pair of bushes 10 fixed below the tray 7.

The arm 8 is rotatably supported, by means of a bracket 11, about a pivot 12 which is mounted transversely between the wings 5 of the hopper 1, proximate to their outer edges.

A bush 13 is mounted on the arm 8 and can be locked in an adjustable position by means of a screw element 14; a crank 16 is articulated at 15 to the bush 13 and can rotate on the same vertical plane as the arm 8. Said crank 16 is pivoted to one end of a rocker 17 which centrally defines a transverse sleeve 18 oscillatably mounted on a further pivot 19, which is mounted transversely between the wings 5 of the hopper 1. At its opposite end, the rocker 17 is provided with a counterweight 20.

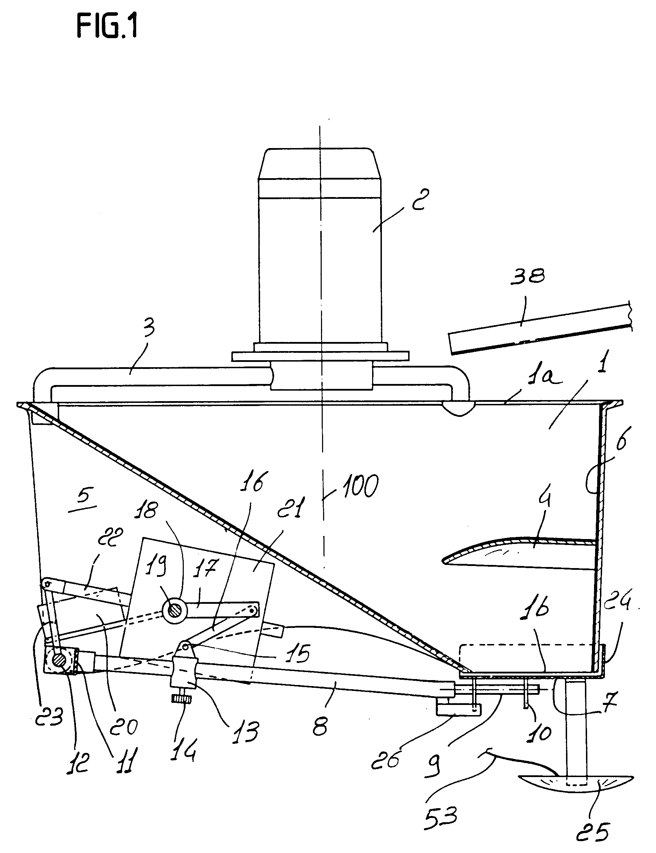

In order to unload relatively heavy parts, a hydraulic shock-absorbing element 21 is conveniently mounted at the pivot 19, as shown in figure 1. The arm 22 of the shock absorber 21 is articulated by means of a lever 23 to the pivot 12 of the hopper 1.

The tray 7 has a side wall 24 which extends along part of its perimeter, so as to be open along a side which is parallel to the arm 8.

The tray 7 is provided, in a downward position, with a probe element 25 for causing said tray to tilt. The tray 7 is normally kept in horizontal position, for example by means of a tooth 26 which is rigidly associated with the arm 8 and abuts with said tray in a downward position.

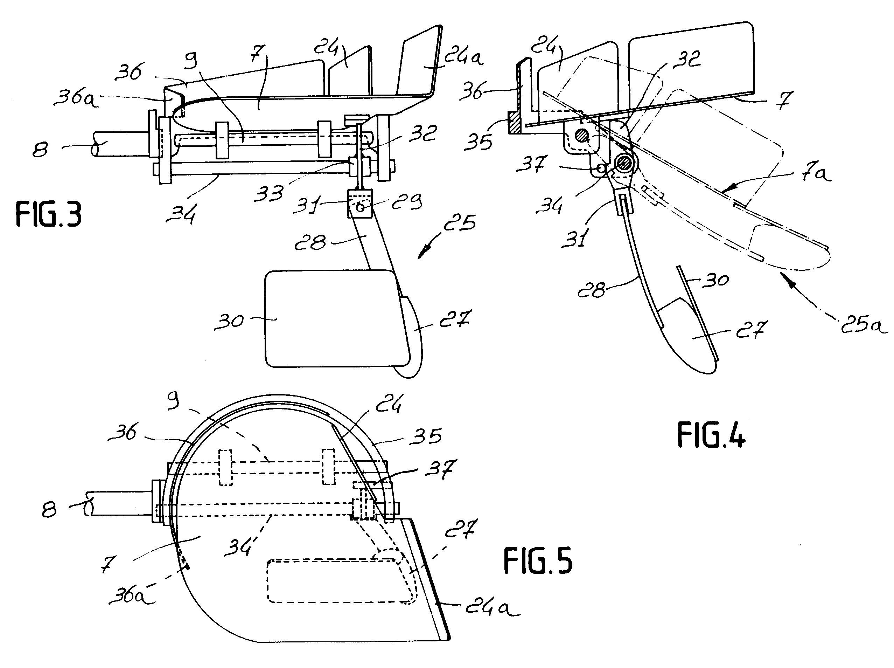

In a preferred embodiment, illustrated in detail in figures 3, 4 and 5, the probe element 25 is constituted by a mass 27 which is fixed to the end of an arm 28. The arm 28 is oscillatable in a plane, which is longitudinal to the arm 8, about a pivot 29 and has a blade-like member 30 rigidly associated therewith. The pivot 29 is rigidly coupled to a fork 31, rigidly associated with a tooth 32 defined by a bush 33 which is mounted on a stem 34. The stem 34 is rotatable about an axis which is parallel to the articulation pivot 9 of the tray 7. The tooth 32 acts as a lower abutment for the tray 7.

The stem 34 is supported, at it ends, by a coupling 35 which has a substantially semicircular shape and is fixed to the end of the arm 8; said coupling 35 furthermore supports the articulation pivot 9 of the tray 7. The coupling 35 defines, in an upward position and for a partial extent, a side wall 36 which is substantially continued by the side wall 24 of the tray 7 on one side and defines, on the opposite side, a ledge 36a. The ledge 36a protrudes from the coupling 35 and is suitable for acting as abutment for the upper surface of said tray in the position for receiving the machined parts. In this position, the tooth 32 is in abutment with a pin 37 which protrudes from the coupling 35.

In the illustrated case, the side wall 24 of the tray 7 is conveniently divided into two segments, of which the segment 24a adjacent to the opening of the tray is widened and slightly inclined outwardly.

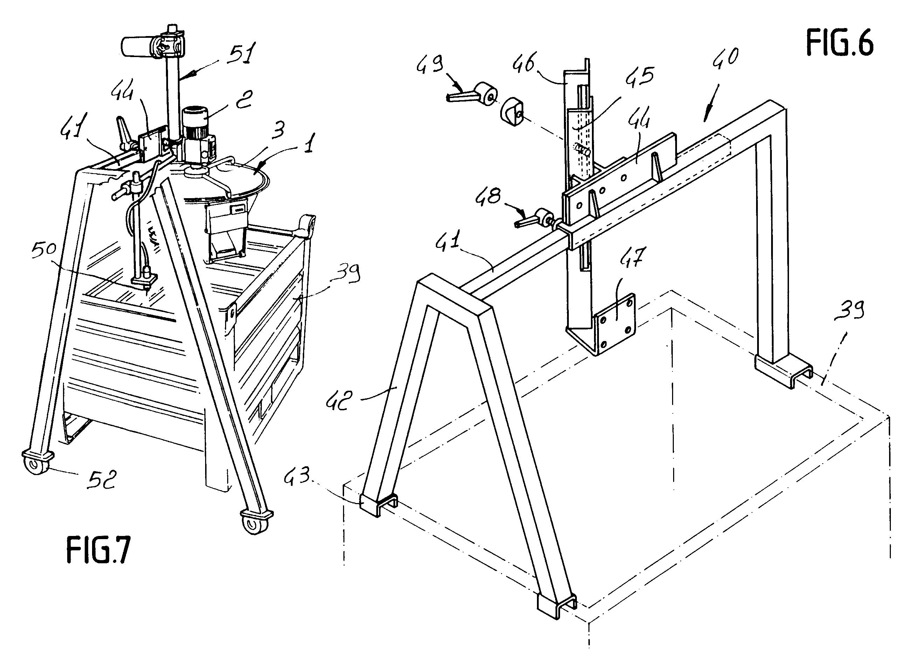

The hopper 1 is arranged below a machined parts conveyor 38. A container 39 to be filled can be positioned below the hopper 1, which is conveniently supported by an appropriate supporting frame, as shown in figures 6 and 7. Alternatively, the apparatus can obviously be applied, by means of suitable brackets, directly to the output of any production line, whether automatic or manual, or to the outlet chute of any machine tool.

In the case illustrated in figure 6, the supporting frame, generally designated by the reference numeral 40, has a telescopic arm 41 extending horizontally between legs 42 which have rests 43 for engaging the edge of the container 39. The telescopic arm 41 is extendable so as to adapt to the size of the container 39 and is provided with a plate 44 for coupling with a vertical guide 45 in an adjustable position.

A slider 46 is fixed in an adjustable position on the vertical guide 45 and is provided, in a downward position, with a bracket 47 for coupling with the motor 2 of the apparatus; the guide 45 and the slider 46 are in practice defined by a pair of angular elements and are fixed in the required position by means of respective securing or fixing elements 48 and 49.

The frame 40 allows to rapidly manually adjust the unloading position of the machined parts with respect to the top level of the parts arranged in the container.

In the case shown in figure 7, the unloading depth is adjusted automatically by virtue of a known proximity detector 50 for controlling the actuation of an electromechanical actuator 51 which supports the motor 2 of the apparatus. The actuator 51 is fixed in an adjustable position to the coupling plate 44 of the telescopic arm 41.

Instead of resting on the container 39, the supporting frame can be mounted on wheels 52, as shown by way of example in the embodiment of figure 7.

In practice, the machined parts descend from the conveyor 38 into the hopper 1, which is rotated by the motor 2. Through the outlet 1b of the hopper, the machined parts are then deposited onto the underlying tray 7. The lining of the hopper 1, made of shock-absorbing material, besides cushioning the fall of the machined parts, contributing to avoid damage thereto, also prevents the wear of said hopper.

Due to the weight of the parts loaded on the tray 7, the arm 8 rotates downward about the pivot 12, against the biasing action of the counterweight 20; it is obviously possible to provide different means, for example elastic biasing means, for the return of the arm 8. The descent of the arm 8 is furthermore conveniently braked, in particular for the unloading of heavy parts, by the action exerted by the hydraulic shock absorber 21. The action of said shock absorber 21 can conveniently be adjusted according to the weight of the parts to be loaded; it is instead practically irrelevant during the subsequent step of return of the arm 8 to the raised position.

It should be noted that during its descent, the tray 7 continues to rest on the tooth 26, 32 which prevents its rotation about the articulation pivot 9; in particular, in the solution shown in figures 3-5, the tooth 32 is kept in the substantially vertical position for supporting the tray 7 by gravity by virtue of the action of the mass 27 of the probe 25.

When the probe 25 makes contact with the parts which are already accumulated on the bottom of the container 39, the tray 7 is forced to rotate about the pivot 9, turning downward the side which is not provided with a side wall and thus causing the unloading of the parts from said tray 7.

In particular, the probe 25 rotates about the axis defined by the stem 34, as indicated by the broken line 25a in figure 4; correspondingly, the tray tilts in the position indicated by the broken line 7a, following the rotation of the tooth 32, until it makes contact with the blade 30 of the probe 25 which, in the tilted position, constitutes an extension of the bottom of said tray.

The fact must be stressed that the mass 27 of the probe 25 has dual pivoting about the axes defined by the pivot 29 and by the stem 34, so as to ensure the vertical arrangement of said probe with any angle of the arm 8 during descent. The tilting of the tray 7 is thus ensured.

Conveniently, the probe 25 has a slightly curved transverse profile, with its convexity directed to the front along the direction of rotation of the hopper 1, so as to avoid jamming against the machined parts unloaded into the container.

It is furthermore possible to connect the probe 25 to a cable 53 which extends from an appropriate winding element and becomes taut due to the descent of the arm 8, so as to cause the tilting of the tray 7. In fact, when the container is still empty, the extent of the stroke of the arm 8 causes a significant slowing of the descent, so that the thrust required to tilt the tray might not arise.

After unloading the parts, the counterweight 20 returns the arm 8 to the raised position, while the tray 7 assumes the horizontal equilibrium position by virtue of the weight of the probe 25, which is mainly due to the mass 27.

In summary, the described apparatus allows to deposit the machined parts inside the container 39, thus sparing said parts from violent impacts. The descent rotation of the arm 8, which is conveniently slowed down, in fact follows the parts up to the point of contact, where they are deposited as a consequence of the tilting of the tray 7.

The fact must be stressed that the continuous rotary motion of the hopper 1 allows to distribute the machined parts in an orderly and uniform manner inside the container. The ledge 4 of the hopper 1 prevents the direct fall of the parts into the outlet 1b when said outlet passes beneath the conveyor 38.

In the practical execution of the invention, the materials employed, as well as the shape and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for filling industrial containers with machined mechanical parts, characterized in that it comprises a hopper (1) which is rotatable about a vertical axis (100), a motor (2) supported above said hopper, an arm (8) oscillatably supported below said hopper, in a vertical plane; said arm being diametrical to a lower outlet (1b) of said hopper, and biased towards a raised position by return means; a tray (7) oscillatably mounted at the end of said arm and being arranged, when said arm is in a raised position, at said outlet of said hopper; a probe element (25), mounted below said tray for tilting said tray, whereby to unload machined parts when said arm (8) rotates to the lowered position.

2. Apparatus according to claim 1, characterized in that said probe element (25) has a mass (27) which is fixed to the end of a secondary arm (28), which is oscillatable in a plane about a pivot articulated to a tooth (32) defined by a bush (33), which is mounted on a stem (34); said tooth being able to rotate on an axis which is parallel to said arm and is parallel to the articulation axis of said tray, said tooth being suitable for acting as lower abutment for said tray.

3. Apparatus according to claim 2, characterized in that said stem (34) is supported, at its ends, by a coupling (35) which is fixed to the end of said arm (8) and defines, in an upward position, a side wall which partially surrounds said tray (7) and defines a ledge, which protrudes from said coupling and acts as an abutment for the upper surface of said tray in the position for receiving said machined parts, said tooth (32) being, in said position for receiving, in abutment with a pin (37) which protrudes from said coupling.

4. Apparatus according to claim 1, characterized in that said hopper has the shape of an oblique cone and is supported by the shaft of said motor (2) by means of arms (3) which extend radially with respect to the circular upper inlet of said hopper.

5. Apparatus according to claim 1, characterized in that said hopper (1) is made of aluminum and its inner surface is lined with synthetic shock-absorbing material.

6. Apparatus according to claim 1, characterized in that a pair of flanking wings (5) extends from the outer surface of said hopper, said wings being arranged symmetrically with respect to the most steeply inclined diametrical plane of said hopper, a pivot being mounted transversely between said wings, said arm (8) being rotatably supported on said pivot.

7. Apparatus according to claim 1, characterized in that said return means have a counterweight (20) which is rigidly associated with a rocker element (17) oscillatably supported below said hopper on an axis which is parallel to the oscillation axis of said oscillating arm (8) and is articulated to said arm by means of a lever system.

8. Apparatus according to claim 1, characterized in that it comprises a hydraulic element (21) for damping descent of said oscillating arm.

9. Apparatus according to claim 1, characterized in that a ledge (4) is defined at said outlet inside said hopper.

10. Apparatus according to claim 1, characterized in that it has a supporting frame (40) provided with a telescopic arm (41), extendable so as to adapt to the size of a container to be filled and supports coupling means for vertically sliding means for supporting said motor and of said hopper.

11. Apparatus according to claim 10, characterized in that said vertically sliding support means comprise an electromechanical actuation element which supports said motor and is controlled by a proximity detection element for detecting an unloading depth inside said container.

## Patentansprüche

1. Vorrichtung zum Füllen von Industriebehältern mit maschinell bearbeiteten Werkstücken, dadurch **gekennzeichnet**, daß sie umfaßt: einen Trichter (1), der um eine vertikale Achse (100) drehbar ist, einen Motor (2), der oberhalb des Trichters angeordnet ist, einen Arm (8), der unterhalb des Trichters derart angeordnet ist, daß er in einer vertikalen Ebene schwenkbar ist, wobei der Arm zu einer unteren Auslaßöffnung (1b) des Trichters diametral ist und durch Rückführmittel in eine angehobene Position vorgespannt ist, eine Auffangvorrichtung (7), die schwenkbar am Ende des Armes angeordnet ist und die, wenn der Arm in einer angehobenen Position ist, an der Auslaßöffnung des Trichters liegt, und ein Sondenelement (25), das unterhalb der Auffangvorrichtung angeordnet ist, um die Auffangvorrichtung zu kippen und dadurch bearbeitete Teile zu entladen, wenn der Arm (8) in die abgesenkte Position schwenkt.

2. Vorrichtung nach Anspruch 1, dadurch **gekennzeichnet**, daß das Sondenelement (25) ein Gewicht (27) hat, das am Ende eines zweiten Armes (28) befestigt ist, der in einer Ebene um einen Drehzapfen schwenkbar ist, der mit einem Zahn (32) verbunden ist, der an einer Buchse (33) ausgebildet ist, die auf einem Schaft (34) angeordnet ist, wobei der Zahn um eine Achse drehbar ist, die zu dem Arm und zu der Schwenkachse der Auffangvorrichtung parallel ist, und wobei der Zahn geeignet ist, als unteres Widerlager für die Auffangvorrichtung zu dienen.

3. Vorrichtung nach Anspruch 2, dadurch **gekennzeichnet**, daß der Schaut (34) an seinen Enden an einem Verbindungselement (35) gelagert ist, das an den Enden des Armes (8) befestigt ist und in einer oberen Position eine Seitenwand bildet, die die Auffangvorrichtung (7) teilweise umgibt, und in der Position zur Aufnahme der maschinell bearbeiteten Teile eine Leiste bildet, die von dem Verbindungselement hervorragt und als Widerlager für die Oberseite der Auffangvorrichtung dient, wobei der Zahn (32) in der Aufnahmeposition an einem Stift (37) anliegt, der von dem Verbindungselement hervorragt.

4. Vorrichtung nach Anspruch 1, dadurch **gekennzeichnet**, daß der Trichter die Form eines schiefen Kegels hat und über Arme (3), die sich relativ zu der kreisförmigen oberen Einfüllöffnung des Trichters radial erstrecken, mit der Welle des Motors (2) verbunden ist.

5. Vorrichtung nach Anspruch 1, dadurch **gekennzeichnet**, daß der Trichter (1) aus Aluminium hergestellt ist und daß seine Innenfläche mit einem stoßdämpfenden synthetischen Material ausgekleidet ist.

6. Vorrichtung nach Anspruch 1, dadurch **gekennzeichnet**, daß sich zwei nebeneinander angeordnete Flügel (5) von der Außenfläche des Trichters erstrecken, die symmetrisch zur am steilsten geneigten diametralen Ebene des Trichters angeordnet sind, daß ein Drehzapfen quer zwischen den Flügeln angeordnet ist, und daß der Arm (8) drehbar an dem Drehzapfen gelagert ist.

7. Vorrichtung nach Anspruch 1, dadurch **gekennzeichnet**, daß die Rückführmittel ein Gegengewicht (20) haben, das starr mit einem Schwinghebelelement (17) verbunden ist, das unterhalb des Trichters derart angeordnet ist, daß es um eine Achse schwenkbar ist, die parallel zur Schwenkachse des schwenkbaren Armes (8) ist, und daß es über ein Hebelsystem mit dem Arm gelenkig verbunden ist.

8. Vorrichtung nach Anspruch 1, dadurch **gekennzeichnet**, daß sie ein Hydraulikelement (21) zum Dämpfen der Abwärtsbewegung des Schwenkarmes umfaßt.

9. Vorrichtung nach Anspruch 1, dadurch **gekennzeichnet**, daß im Inneren des Trichters an dessen Auslaßöffnung eine Leiste (4) ausgebildet ist.

10. Vorrichtung nach Anspruch 1, dadurch **gekennzeichnet**, daß sie einen Trägerrahmen (40) mit einem Teleskoparm (41) hat, der in Anpassung an die Größe eines zu füllenden Behälters ausziehbar ist und Kopplungsmittel für vertikale Gleiteinrichtungen trägt, an denen der Motor und der Trichter angeordnet sind.

11. Vorrichtung nach Anspruch 10, dadurch **gekennzeichnet**, daß die vertikalen Gleitträgereinrichtungen ein elektromechanisches Betätigungselement haben, das den Motor trägt und von einem Näherungsanzeigeelement zum Erfassen einer Entladetiefe im Behälter gesteuert wird.

## Revendications

1. Appareil pour remplir des conteneurs industriels avec des pièces mécaniques usinées,
caractérisé en ce qu'il comprend une trémie (1) qui est rotative autour d'un axe vertical (100), un moteur (2) supporté au-dessus de ladite trémie, un bras (8) supporté de façon oscillante en-dessous de ladite trémie, dans un plan vertical, ledit bras étant diamétral à une sortie inférieure (1b) de ladite trémie, et sollicité vers une position levée par des moyens de rappel ; un plateau (7) monté de façon oscillante à l'extrémité dudit bras et étant agencé, quand ledit bras est dans une position levée, à ladite sortie de ladite trémie ; un élément à capteur (25) monté en-dessous dudit plateau pour basculer ledit plateau, pour décharger des pièces usinées quand ledit bras (8) tourne vers la position abaissée.

2. Appareil selon la revendication 1,
caractérisé en ce que ledit élément à capteur (25) présente une masse (27) qui est fixée à l'extrémité d'un bras secondaire (28), qui est susceptible d'osciller dans un plan autour d'un pivot articulé à une dent (32) définie par une douille (33) qui est montée sur une tige (34), ladite dent étant apte à tourner sur un axe qui est parallèle audit bras et est parallèle à l'axe d'articulation dudit plateau, ladite dent étant appropriée pour agir comme butée inférieure pour ledit plateau.

3. Appareil selon la revendication 2,
caractérisé en ce que ladite tige (34) est supportée, à ses extrémités, par un accouplement (35) qui est fixé à l'extrémité dudit bras (8) et définit, dans une position vers le haut, une paroi latérale qui entoure partiellement ledit plateau (7) et définit un rebord, qui fait saillie dudit accouplement et agit comme une butée pour la surface supérieure dudit plateau dans la position pour recevoir lesdites pièces usinées, ladite dent (32) étant, dans ladite position de réception, en butée avec une broche (37) qui fait saillie dudit accouplement.

4. Appareil selon la revendication 1,
caractérisé en ce que ladite trémie présente la forme d'un cône oblique et est supportée par l'arbre dudit moteur (2) par l'intermédiaire de bras (3) qui s'étendent radialement par rapport à l'entrée circulaire supérieure de ladite trémie.

5. Appareil selon la revendication 1,
caractérisé en ce que ladite trémie (1) est réalisée en aluminium et sa surface interne est revêtue de matière synthétique absorbant les chocs.

6. Appareil selon la revendication 1,
caractérisé en ce qu'une paire d'ailes de flanquement (5) s'étend de la surface externe de ladite trémie, lesdites ailes étant agencées symétriquement par rapport au plan diamétral incliné le plus abrupt de ladite trémie, un pivot étant monté transversalement entre lesdites ailes, ledit bras (8) étant supporté, de façon rotative, sur ledit pivot.

7. Appareil selon la revendication 1,
caractérisé en ce que lesdits moyens de rappel présentent un contre-poids (20) qui est rigidement associé à un élément basculant (17) supporté, de façon oscillante, en-dessous de ladite trémie sur un axe qui est parallèle à l'axe d'oscillation dudit bras oscillant (8) et est articulé audit bras par l'intermédiaire d'un système à leviers.

8. Appareil selon la revendication 1,
caractérisé en ce qu'il comprend un élément hydraulique (21) pour amortir la descente dudit bras oscillant.

9. Appareil selon la revendication 1,
caractérisé en ce qu'un rebord (4) est défini à ladite sortie, à l'intérieur de ladite trémie.

10. Appareil selon la revendication 1,
caractérisé en ce qu'il présente un bâti de support (40) muni d'un bras télescopique (41), susceptible de s'étendre pour s'adapter à la dimension d'un conteneur à remplir et supporte des moyens d'accouplement pour des moyens verticalement coulissants pour supporter ledit moteur et ladite trémie.

11. Appareil selon la revendication 10,
caractérisé en ce que lesdits moyens de support verticalement coulissants comprennent un élément d'actionnement électromécanique qui supporte ledit moteur et est commandé par un élément de détection de proximité pour détecter une hauteur de déchargement à l'intérieur dudit conteneur.
